# EUROPEAN PATENT SPECIFICATION

(11) **EP 3 084 535 B1**
(45) Date of publication and mention of the grant of the patent: **16.01.2019**
(21) Application number: 14838900.0
(22) Date of filing: 18.12.2014
(51) Int. Cl.: G05B 19/05, G06F 21/76, H04L 29/06

(54) **A SYSTEM AND METHOD FOR SECURING AN INDUSTRIAL CONTROL SYSTEM**
SYSTEM UND VERFAHREN ZUR SICHERUNG EINES INDUSTRIEREGLERSYSTEMS
SYSTÈME ET PROCÉDÉ DE SÉCURISATION D'UN SYSTÈME DE COMMANDE INDUSTRIEL

(30) Priority: 20.12.2013 IN 5962CH2013
(43) Date of publication of application: 26.10.2016
(73) Proprietor: Westinghouse Electric Company LLC, Cranberry Township, PA 16066 (US); Sivasamy, Velliangiri, Hyderabad 500081 (IN)
(72) Inventor: POONAMALLE, Thrilok L, Madhapur, Hyderabad (a.p.) Pin: 500081 (IN)
(74) Representative: Gallo, Wolfgang
(86) International application number: PCT/IN2014/000783
(87) International publication number: WO 2015/092817

(56) References cited:
- EP-A1- 2 528 000
- EP-A2- 0 851 358
- WO-A1-2006/131317
- WO-A2-02/19064
- US-A1- 2007 152 709
- US-B1- 6 826 434

## Description

### FIELD OF THE INVENTION

The present invention relates in general to systems and methods for control of industrial processes in a plant, and more particularly to secured systems and methods for control of industrial processes.

### BACKGROUND OF THE INVENTION

In an industrial plant the control system is used to control most of the industrial processes performed at the plant. Typically, the plant has a centralized control room having a DCS (Distributed Control System) with user I/O, disc I/O, and other peripherals. Coupled to the control system network are controllers. The process I/O subsystem includes a plurality of I/O ports which are connected to various field devices throughout the plant. Field devices includes various types of analytical equipment, pressure sensors, capacitive pressure sensors, resistive temperature detectors, power switches, thermocouples, limit switches, on/off switches, flow transmitters, pressure transmitters, capacitance level switches, weigh scales, valve positioners, valve controllers, actuators, solenoids, and indicator lights. As used herein, the term "field device" encompasses these devices, as well as any other device that performs a function in a distributed control system and is known in the control art.

A process industrial control system refers to a monitoring and control system, usually of an industrial system or a set of industrial processes, in which a distributed control system (DCS) may utilize controller elements to monitor and control the industrial processes. The controllers are governed by a DCS server and engineering stations that sends information to human operators who monitor and control the industrial processes via an operator console which is located in a control room of the plant. A single DCS may contain multiple operator consoles which are used to notify human operators about industrial process conditions via alarms and viewable data. Multiple control systems like DCS & ESD (Emergency Shutdown System)may be connected by a process control communications network.

Industrial control system (ICS) consists of a corporate LAN(Enterprises Control Network) anda control system LAN. Corporate workstations, business servers, web servers, corporate database are classified into corporate LAN. Control room work station, DCS controllers, HMI (Human Machine Interface), entire production lines and processes which could be linked over industrial cable/bus networks (Modbus, Profibus, Fieldbus and others) to provide monitoring and control to a foreman's desk and Engineering Workstation are classified as the control system LAN.

DCS (Distributed Control System) is used to control industrial processes in an industrial plant such as electric power generation, oil and gas refineries, chemical, automotive production and other various industries. DCSs have many unique characteristics including a need for real-time response and extremely high availability, predictability, and reliability of controls & data. The use of DCS thereby results in minimum risk to the health and safety of human beings, prevents serious damage to the environment, prevents serious production stoppages or slowdowns that result in negative impact to a nation's economy and the ability to carry out critical functions, protecting the critical infrastructure from common human errors and safeguarding them against the compromise of proprietary information.

DCS is implemented in a variety of industries, to monitor and control distributed equipment used in industrial processes. DCS are dedicated systems used to control manufacturing processes that are continuous or batch-oriented. DCSs are connected to sensors and actuators and use setpoint controls, to control the process.. The input/output devices (I/O) may either be integrated with the controller or located remotely. The entire system of controllers is connected by networks for communication and monitoring. Based on information received from remote stations, automated or operator-driven supervisory commands can be pushed to remote station control devices, which are often referred to as field devices. Field devices control local operations such as opening and closing of valves and breakers, starting and stopping of pumps, motors and other processes, collecting data from sensor systems, and monitoring the local environment for alarm conditions.

DCS have computational capabilities and, in addition to proportional-integral-derivative (PID) control can generally perform logic and sequential control. Even though there are dedicated safety systems and networks like ESD (Emergency Shutdown systems) available in the ICS. A power plant shutdown may result in huge economic losses.

Data transfer to and from an ICS must to be evaluated for security risk. USB storage drives or the Enterprise/ICS firewall is a flawed defence. It is observed that complete prevention of ICS infection is probably impossible and that instead of complete prevention, industry must create a security architecture that can safeguard the ICS from cyber break. ICS or Supervisory Control And Data Acquisition (SCADA) system is highly complex and interconnected, ensuing in multiple potential pathways from the outside world to the process controllers.

Enterprise Control Network is the corporate network, which hosts most business users, business accounting and planning systems, such as Enterprise Resource Planning (ERP) systems. Microsoft Internet Security and Acceleration (ISA) Servers protect the plant zones from the WAN. They also protect zones from each other. All traffic between security zones passes through an ISA server. Each ISA server hosts a number of functions, such as firewall services, network address translation, web proxies, virus scanning and secure web server publishing. All of the ISA servers are configured by default to block connections originating in less-trusted networks, such as the corporate WAN. The ISA servers allow connections, such as web services connections, from clients on less-trusted networks to selected servers, such as web servers, in the Perimeter Network.

DCS devices and ERP systems typically use non-hardened networking stacks, the most common operating systems is Microsoft Windows. As a result, such systems can easily fall prey to viruses, worms, and Trojans. Regardless of the quality of antivirus software installed, malware (Trojans, viruses and worms) can be inadvertently downloaded from the Internet or any other means, and these can replicate themselves on portable memory devices of all types.

Recent examples exists which shows failure of a plant operation due to the cyber attack and modification of control logic on the DCS for industrial processes. The largest electrical outage in world history also called massive blackout happened in July 2012 knocked out power to nearly 700 million people in India which is more than 10% of the world's population without electricity over two days, crippling heavy economic costs. The cause of this is suspected to be an intended human interruption or any other factor or viruses, worms, and Trojans that influence control system malfunctioning.

One such example is of the Stuxnet worm, a piece of computer malware designed to harm industrial processes control. Stuxnet might migrate from the outside world to supposedly isolated and secure industrial control systems (ICS).This infected and propagated into the ICS, and was powerful enough to escape security technologies and procedures. It propagates via ERP network exposed to internet or Via infected removable drives (such as USB flash drives and external portable hard disks), or Via Local Area Network communications (such as shared network drives and other services), and infected DCS/PLC control logic files. It propagates quickly via multiple network pathways, modifies its behaviour to avoid detection by available virus detection technologies, establishes a peer-to-peer network to propagate command and control server even to equipment without direct Internet connectivity

It further modifies programming logic, causing process controllers to malfunction, hides the modified control logic programs from control engineers and system administrators to diagnose the malfunctioned system. Windows operating systems and Process Controllers fall prey to this malware. Once it detects a suitable target, it modifies control logic in specific models of Control System. The objective appears to be to sabotage a specific industrial process using variable-frequency drive control Logic. These worms are not identified and blocked even by advanced cyber security.

Cyber-crime and other electronic attacks against critical infrastructure are also on the rise. While remote cracking once required a fair amount of skill or computer knowledge, hackers can now download attack scripts and protocols from the Internet and launch them against victim sites or systems. Thus, while attack tools have become more sophisticated, they have also become easier to use. This also poses face a, variety of significant national security threats. Stuxnet invasion and hacking of Trans-Siberian pipeline project are few typical examples of cyber and electronic attack on industrial Control Systems.
Document WO 02/190 064 A2 teaches a method and system for preventing the unwanted alteration of data and programs stored within a computer system. The system employs a field programmable gate array to control access to a storage device. Different profiles can be accessed through the use of passwords. Different profiles provide different control parameters for access to the storage device. The gate array can be reprogrammed from time to time using downloadable electronic files. Security is achieved in download by using keys and encryption techniques.
Document US 6 826 434 B1 describes a computerized numerical control system for controlling a servomechanism under the direction of a general-purpose computer system. The system implements in software a PID controller for determining appropriate inputs to the servomechanism. The system further includes a Field Programmable Gate Array which is loadable with custom logic for remotely interfacing to the servomechanism. The FPGA executes customized logic to control a synchronous AC motor.

Based on the above examples it is just to say that the present infrastructure of DCSs is not fully secured against and may lead to industrial plant failures and causing huge losses in terms of safety, money and environmental hazards. In view of the limitations inherent in the systems and method of industrial control, there exists a need for a secured DCS and method of securing the DCS in an efficient, fast, robust, flexible, cost effective, secure and environment friendly manner. The present invention fulfils this need and provides further advantages as described in the following summary.

### SUMMARY OF THE INVENTION

In view of the foregoing disadvantages inherent in the prior arts, the general purpose of the present. invention is to provide an improved combination of convenience and utility, to include the advantages of the prior art, and to overcome the drawbacks inherent therein.

In one aspect, the present invention provides a secure distributed control system according to independent claim 1.

In another aspect of the present invention, the control logic in the FPGA module is configured in a Hardware Description Language using special tools.

In yet another aspect of the present invention, the FPGA module configuration in the Hardware Description Language prevents modification in the control logic from an intended human interruption, an offline or an online software threat including a cyber attack, a malware, a Trojan, a virus, an infected storage device or a combination thereof.

In another aspect the present invention provides a method of securing a distributed control system according to independent claim 6.

These together with other aspects of the invention, along with the various features of novelty that characterize the invention, are pointed out with particularity in the claims annexed hereto and forming a part of this disclosure. For a better understanding of the invention, its operating advantages and the specific objects attained by its uses, reference should be had to the accompanying drawings and descriptive matter in which there are illustrated exemplary embodiments of the invention.

### BRIEF DESCRIPTION OF THE DRAWINGS

The advantages and features of the present invention will become better understood with reference to the following more detailed description taken in conjunction with the accompanying drawings in which:
FIG. 1 illustrates a schematic diagram of the secured DCS, according to one embodiment of the present invention;
FIG. 2 illustrates a block diagram of the controller module, according to one embodiment of the present invention;
FIG. 3 illustrates a flowchart of the method of securing DCS, according to one embodiment of the present invention; and
FIG. 4 illustrates schematic diagram of the system of the present invention working along with ESD system, according to one embodiment of the present invention.

Like reference numerals refer to like parts throughout the several views of the drawings.

### DETAILED DESCRIPTION OF THE DRAWINGS

In the following description, for purposes of explanation, numerous specific details are set forth in order to provide a thorough understanding of the present invention. It will be apparent, however, to one skilled in the art that the present invention may be practiced without these specific details.

As used herein, the term 'plurality' refers to the presence of more than one of the referenced item and the terms 'a', 'an', and 'at least' do not denote a limitation of quantity, but rather denote the presence of at least one of the referenced item.

The terms 'industrial process' or 'process' may be used herein interchangeably and refer to convey the same meaning.

In an exemplary embodiment, the present invention provides a method and system for securing an industrial control system. The system and method of the present invention may be used for mass implementation in an easy, cost effective, environment friendly and productive way.

It is to be understood that the improvements of the present invention are applicable to any of a number of methods and systems for securing an industrial control system, other than those which are specifically described below. Such methods and systems will be readily understood by the person of ordinary skill in the art, and are achievable by causing various changes that are themselves known in state of the art.

The trademarks, software names, etc used in the present description are property of the respective owner companies and used herein for illustrative purposes only. The applicant does not claim any rights on such terms.

Reference herein to "one embodiment" or "another embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments. Further, the order of steps in process flowcharts or diagrams representing one or more embodiments of the invention do not inherently indicate any particular order nor imply any limitations in the invention.

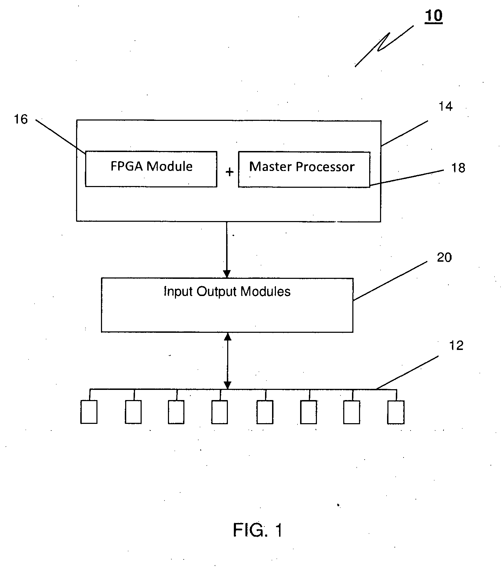

Referring to FIG. 1 that illustrates a schematic diagram of the secure distributed control system 10 used for controlling industrial processes, according to one embodiment of the present invention. The system 10 comprises a plurality of field devices 12, each of the field device 12 is used for operations including starting and stopping an industrial process, collecting data from a sensor, monitoring an industrial process parameter for an alarm condition, a controller module 14 to control a plurality of industrial processes and take necessary action on the process conditions and alarm condition according to preset control logics, based on the data received from the plurality of field devices 12. The controller module 14 comprises a Field Programmable Gate Array (FPGA) module 16 including control logic for at least one critical industrial process from the plurality of industrial processes and master processor 18 including control logic of all other industrial processes from the plurality of industrial processes except the critical process. The system further includes an Input Output module 20 for exchanging signals between the plurality of field devices 12 and the controller module 14.

The field devices 12 may include various types of analytical equipments, pressure sensors, capacitive pressure sensors, resistive temperature detectors, power switches, thermocouples, limit switches, on/off switches, flow transmitters, pressure transmitters, capacitance level switches, weigh scales, valve positioners, valve controllers, actuators, solenoids, and indicator lights. As used herein, the term "field device" encompasses these devices, as well as any other device that performs a function in a distributed control system and is known in the control art.

The controller module 14 receives signals from the field devices 12 about the process parameters and takes necessary action to control the respective industrial process. The controller module 14 has programming of the control logic of all the processes about what are the correct operation parameters of a process, what is the threshold value of detected parameter, what action to be taken when there is change in the parameters. The controller module 14 receives signals from the field devices 12 via input output module 20. The input output module 20 transfers the values of different parameters of the processes collected by the field devices 12 to the controller module 14 and also transmit commands of the controller module to the filed devices for taking the necessary action.

The system 10 of the present invention further includes an operator console (not shown) which allows an operator to monitor different industrial processes and give necessary commands for controlling the processes.

The controller module 14 of the present invention comprises a Field Programmable Gate Array (FPGA) module 16 and a master processor 18. A conventional DCS controller module has a single processor which includes control logic of all the plurality of industrial processes. However, the system 10 of the present invention proposes the controller module 14 which comprises a Field Programmable Gate Array (FPGA) module 16 including control logic for at least one critical industrial process selected from the plurality of industrial processes and the master processor 18 including control logic of all other industrial processes from the plurality of industrial processes except the critical process. In another embodiment of the present invention more than one process may be identified as critical processes and. their respective control logics may be written in the FPGA module 16.

In one embodiment of the present invention the control logic in the FPGA module 16 is configured in a Hardware Description Language. The FPGA module is configurable only using special tools and may not be configured if the special tools are not available.

FPGA (Field-programmable gate array) module is a programmable integrated circuit designed to be configured by a customer or a designer. FPGA security features at the software and intellectual property level. FPGA are prefabricated silicon devices that can be electrically programmed to become almost any kind of digital circuit or system. Synthesis tools translate the code into bit stream, whi.ch is downloaded to the
configuration memory of the FPGA. Commonly, hardware description languages (HDL) are use to configure the device. There are also library based solutions which are optimized for a specific device.

FPGA can operate simultaneously in parallel. Not only does the parallel operation enable much higher speed, it also eliminates the need to switch tasks or contexts as with computers. For real-time applications, the main function of a computer operating system is to switch tasks to process interrupts and dispatch computer resources to the various tasks in the program. Parallel circuitry within FPGAs also produces an efficient pipeline action for signal processing applications.

HDL is the most common approach to configure a FPGA. There are two dominating languages, VHDL and Verilog. Verilog was originally a C-like programming language to model hardware. FPGAs have large resources of logic gates and RAM blocks to implement complex digital computations.

The FPGA module configuration in the Hardware Description Language prevents modification in the control logic from an intended human interruption, an offline or an online software threat including a cyber attack, a malware, a Trojan, a virus, an infected storage device or a combination thereof, thus securing the system 10 against any modification of critical process control logic. The infected storage device may be external or integral storage device such as USB, memory card, hard disk or any such storage device known in the art which is infected by any control logic affecting program.

The deterioration or modification of control logic and threat to the DCS may be any external threat or some internal threat. The external threats may come from internet, ERP Network or any other network connected to plant network, any infected mass storage device like USB, external hard-drive or any other storage device. The external threats may be in the form of any type of malware, virus, Trojan, worm, spyware or hacking of control network.

Similarly the internal threats may be some human effect like a human mistake in handling the process controls which causes the alarm condition. It may be in the form of some intended human interruption during plant operation, plant maintenance or any other plant condition. The system 10 of the present invention prevents deterioration or modification of control logics of the industrial process against external and internal threats.

In yet another embodiment of the present invention the FPGA module 16 is a hardware component which is interfaced to the master processor 18 and the Input Output modules 20 using a communication bus. This makes the implementation of the system 10 very easy. The critical process control is implemented on the FPGA module 16 which can be embedded to and existing DCS at the controller module level and utilizes the same Input\Output available in the DCS effectively. Thus it avoids investment on new control system.

The industrial control system in addition to DCS also includes ESD (Emergency Shutdown System) which is activated in off nominal conditions and shutdowns the plant. Startup & productivity cannot be achieved unless the DCS system is completely tested again after shutdown by a cyber attack. Complete testing and commissioning of DCS is required. The system 10 of the present invention reduces the retesting and commissioning activities of the plant, since only the testing and commissioning needs to be done only for less critical processes. The critical process is safe and protected in FPGA so the testing and commissioning need to be done only for remaining less critical processes. This facilitates quicker plant startup in case of any cyber-attacks, rather than complete testing and commissioning of DCS and it also eliminates economic and environmental hazards and improves safety

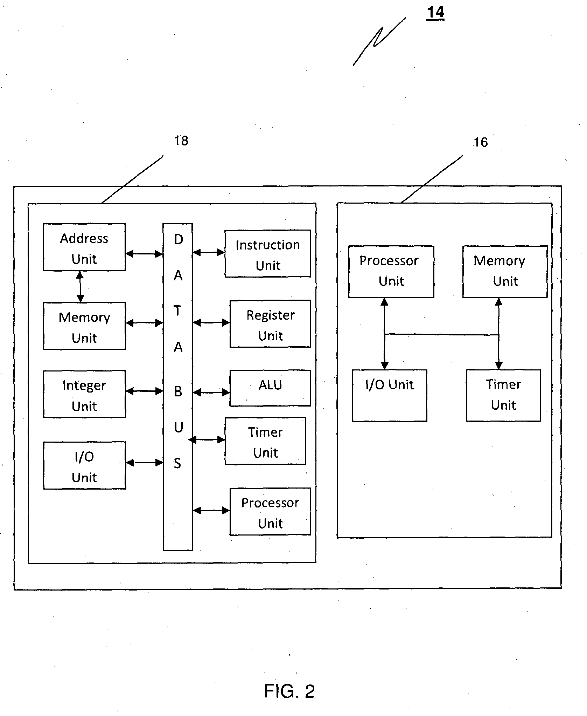

Referring to FIG. 2 that illustrates a block diagram of the controller module 14, according to one embodiment of the present invention. The controller module 14 includes a FPGA module 16 and the master processor 18. The FPGA module 16 has a FPGA processor unit and is connected to memory unit, Timer unit, and I/O unit. Similarly the master controller 18 has an instruction unit, Register unit, Timer unit, ALU, Address unit, Memory unit, Integer unit, processor unit and I/O unit which are connected via a data bus.

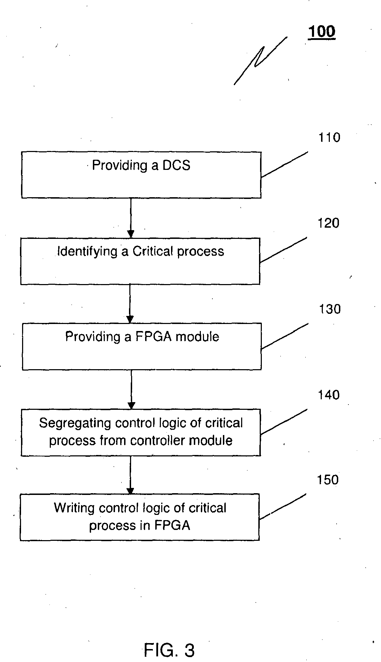

FIG. 3 illustrates a flowchart of the method 100 of securing a distributed control system used for controlling industrial processes, against modification of the control logic, according to one embodiment of the present invention. The method 100 starts with step 110 of providing a Distributed Control System including a plurality of field devices 12, a controller module 14 and an Input Output module 20. A convention DCS available in prior art is provided and implemented in the industrial control of the processes in the plant. The field devices 12 collect information about process parameters and supply it to the controller module 14 via I/O module 20. The controller monitors all the information and provides necessary commands to the field devices based on the data and the programming of control logic in the controller module. The DCS may further include other standard components available in the prior art to be used in industrial process control and hereby included by reference.

In step 120 at least one process from the plurality of industrial processes in the industrial plant is identified as a critical process. This identification may be based on the experience, or choice of the plant owner or by the designers. In another embodiment of the present invention a plurality of processes may be identified as critical processes. For example in a thermal power plant there are different operations performed by different components such as a boiler, turbine, condenser, feed water pump and stack. Plant engineers may feel that the boiler operations are critical for the plant, then the generation of steam in boiler is identified as critical process. The plant engineers may also feel that the feed water pump is also a critical component so the process is also indentified as another critical process and here two processes are identified as critical processes.

In a similar manner for a delayed coker unit in an oil refinery having a furnace, coke drum, quench tower, fractionators and reflux drum, the operator may identify coke drum operations as critical so it is used as the critical process in the method of the present invention.

Next in step 130 a Field Programmable Gate Array (FPGA) module 16 is provided. The FPGA module 16 is a programmable integrated circuit designed to be configured by a customer or a designer.

In step 140 the control logic of the identified critical process is segregated from the controller module 14. The portions of programming of control logic for the identified critical process are removed from the controller module.

Next in step 150 the FPGA module 16 is configured by writing the control logic of the critical process in the FPGA module. The removed portions of programming corresponding to identified critical process from the controller module are configured in the FPGA module such that the controller module has now two components working simultaneously; the FPGA module including control logic for the critical process and a master processor 18 including control logic of all other processes from the plurality of industrial processes except the critical process. The I/O module 20 is common for both the master controller 18 and the FPGA module 16 but the FPGA module 16 has only the control logic of critical process. In the example of thermal power plant described earlier say the control logic of the boiler drum level is in the FPGA module and the rest of the processes of the thermal power plant are controlled by the master processor.

In one embodiment of the present method, the FPGA module is configured by writing the control logic in a Hardware Description Language. In another embodiment the configuration of the FPGA module is performed only using special tools. The configuration of the FPGA module in the Hardware Description Language prevents modification in the control logic from an intended human interruption, an offline or an online software threat including a cyber attack, a malware, a Trojan, a virus, an infected storage device or any combination of them. The infected storage device may be external or integral storage device such as USB, memory card, hard disk or any such storage device known in the art which is infected by any control logic affecting program.

Design theft has the greatest concern with nuclear power projects and the due to programmable logic's integration capability, the potential for cloning and reverse-engineering becomes a concern for an increasing number and variety of such applications. Similarly the designer/vendor wants to protect a product or design embedded in their system which forms their intellectual property from being cloned or reverse engineered. The designer/vendor also wants to protect the integrity and confidentiality of a data stream being sent to or from an FPGA. Users are concerned with preventing device designs from being copied, corrupted, or otherwise interfered with. IP Security is the primary concerns of companies or IP developers whose competitive advantage is derived from their ability to implement complex proprietary designs. IP theft has grown dramatically in recent years resulting in enormous economic losses. The writing of control logic of critical process in the FPGA module using a Hardware Description Language also prevents the content being copied by copycats and prevents design and intellectual property theft. The FPGA are only configurable using special tools, this makes it more difficult from being reverse engineered and copied.

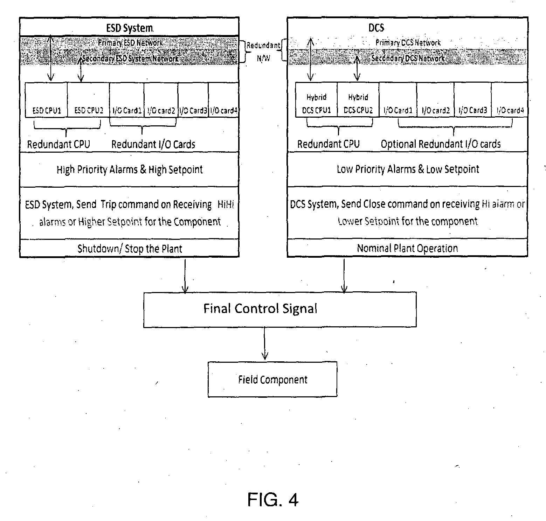

FIG. 4 illustrates schematic diagram of the system of the present invention working along with ESD system, according to one embodiment of the present invention. The ESD system has a primary and secondary ESD network which are respectively connected to two redundant Central Processing Units (CPUs) CPU1 and CPU2. These CPU performs their intended functions and interact with their respective networks to provide overall picture to other connected systems to the networks. The ESD systems further includes four redundant I/O cards to receive information from the field devices and send the commands of the CPU to the field devices and thereby controlling the field component working. ESD systems are designed to shut down the plant in case of very high priority alarm situation and very high setpoint value of any control parameter. If the ESD system receives a very high alarm signal or very high setpoint value related to any one component or process in the industrial plant, it sends a trip command and the whole plant is stopped.

The DCS as shown in FIG. 4 is the secured DCS 10 according to one embodiment of the present invention. The DCS 10 has the controller module 14 with FPGA 16 and the master processor 18 is here referred as hybrid DCS. The term 'hybrid DCS' hereafter also refers to the system 10 of the present invention. As shown it includes two redundant CPUs Hybrid CPU1 and Hybrid CPU2 which are connected to primary DCS network and secondary DCS network respectively. In one embodiment of the present invention the system 10 may include four optional redundant 1/0 cards for collecting data from the field devices directly and independent to the 1/0 cards of the ESD system.

The DCS system 10 is for nominal operation of the plant and does not shutdowns the plant. It operated for low priority alarms and lower setpoints. If any of the process or component shows parameter values which are in the range of DCS control then the DCS control send close command to operate the identified process or component. The lower alarm situation and lower setpoints do not require the shutdown of the. whole plant and by just closing the particular process or device the other processes may work till the stopped process or component is repaired. The DCS system 10 of the present invention avoids unsafe plant operation and shutdown of the whole plant in such situations and thereby prevents huge losses incurred due to retesting and commissioning of the plant after a cyber attack. The ESD and DCS systems receive the data from field devices and based on the DCS and ESD system logics send the final signal to the field component.

FPGAs have several advantages like:
- their high reliability,
- high speed,
- conceptually simple implementation,
- highly rugged and radiation hardened which made several nuclear reactors implement safety and curtail functions with FPGAs,
- greater flexibility for programming,
- faster I/O response times and specialized functionality,
- more computing power than digital signal processors,
- low power consumption,
- achieving high level of control for longer period.

The present system 10 and method 100 using FPGAs may find a useful implementation for nuclear process control systems because of above advantages. The performance level of FPGAs and their associated software tools have advanced nowadays such that they are now being considered in the design of most of the complex digital control systems.

It is to be noted that the method of the present invention may also be implemented as an step in any existing DCS or may be developed as a part of a new independent DCS or any software in an easy, cost effective, environment friendly and productive way.

In other instances, well-known methods, procedures, and steps have not been described herein, so as not to obscure the particular embodiments of the present invention. Further, various aspects of embodiments of the present invention may be made using various systems and methods.

Although a particular exemplary embodiment of the invention has been disclosed in detail for illustrative purposes, it will be recognized to those skilled in the art that variations or modifications of the disclosed invention, including the rearrangement in the steps of the method, changes in steps, variances in terms of devices may be possible. Accordingly, the invention is intended to embrace all such alternatives, modifications and variations as may fall within the spirit and scope of the present invention.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is understood that various omissions, substitutions of equivalents are contemplated as circumstance may suggest or render expedient, but is intended to cover the application or implementation without departing from the scope of the claims of the present invention.

## Claims

1. A secure distributed control system (10) used for controlling industrial processes, the system comprising:
- a plurality of field devices (12), each of the field device is used for operations including starting and stopping an industrial process, collecting data from a sensor, monitoring an industrial process parameter for an alarm condition;
- a controller module (14) to control a plurality of industrial processes and take necessary action on the alarm condition according to preset control logics; based on the data received from the plurality of field devices (12), the controller module comprising:
- a Field Programmable Gate Array (FPGA) module (16) including control logic for at least one critical industrial process from the plurality of industrial processes; and
- a master processor (18) operating in parallel with the FPGA (16), the master processor including control logic of all other industrial processes from the plurality of industrial processes except the at least one critical process; and
- an Input Output module (20) for exchanging signals between the plurality of field devices (12) and the controller module (14).

2. The system according to claim 1, wherein the control logic in the FPGA module (16) is configured in a Hardware Description Language.

3. The system according to claim 1, wherein the FPGA module (16) is configurable only using special tools.

4. The system according to claim 2, wherein the FPGA module (16) configuration in the Hardware Description Language prevents modification in the control logic from an intended human interruption, an offline or an online software threat including a cyber-attack, a malware, a Trojan, a virus, an infected storage device or a combination thereof.

5. The system according to claim 1, wherein the FPGA module (16) is a hardware component which is interfaced to the master processor (18) and the Input Output modules (20) using a communication bus.

6. A method (100) of securing a distributed control system (10) used for controlling industrial processes, against modification of a control logic, the method; comprising steps of:
- providing (110) a Distributed Control System (10) including a plurality of field devices (12), I a controller module (14) and an Input Output module (20);
- identifying (120) at least one critical process from a plurality of industrial processes;
- providing (130) a Field Programmable Gate Array (FPGA) module (16);
- segregating (140) a control logic of the at least one critical process from the controller module (14); and
- configuring (150) the FPGA module (16) by writing the control logic of the at least one critical process in the FPGA module, such that the controller module comprises the FPGA module including control logic for at least one critical process and a master processor operating in parallel with the FPGA, the master processor including control logic of all other processes from the plurality of industrial processes except the at least one critical process.

7. The method according to claim 6, wherein the FPGA module (16) is configured by writing the control logic in a Hardware Description Language.

8. The method according to claim 6, wherein the configuration of the FPGA module (16) is performed only using special tools.

9. The method according to claim 7, wherein the configuration of the FPGA module (16) in the Hardware Description Language prevents modification in the control logic from an intended human interruption, an offline or an online software threat including a cyber-attack, a malware, a Trojan, a virus, an infected storage device or a combination thereof.

## Patentansprüche

1. Sicheres verteiltes Steuersystem (10), das zur Steuerung industrieller Prozesse verwendet wird, wobei das System umfasst:
- eine Vielzahl von Feldvorrichtungen (12), wobei jede Feldvorrichtung für Operationen verwendet wird, die das Starten und Stoppen eines industriellen Prozesses, das Sammeln von Daten von einem Sensor, das Überwachen eines industriellen Prozessparameters auf einen Alarmzustand umfassen;
- ein Steuermodul (14) zur Steuerung einer Vielzahl von industriellen Prozessen und zum Treffen notwendiger Maßnahmen für den Alarmzustand gemäß einer voreingestellten Steuerlogik; auf Grundlage der Daten, die an der Vielzahl von Feldvorrichtungen (12) empfangen werden, wobei das Steuermodul umfasst:
- ein feldprogrammierbares Gatteranordnungs- oder FPGA-Modul (16) umfassend Steuerlogik für zumindest einen kritischen industriellen Prozess aus der Vielzahl von industriellen Prozessen; und
- einen Master-Prozessor (18), der parallel mit der FPGA (16) arbeitet, wobei der Master-Prozessor Steuerlogik für alle weiteren industriellen Prozesse aus der Vielzahl von industriellen Prozessen mit Ausnahme des zumindest einen kritischen Prozesses umfasst; und
- ein Eingabe-/Ausgabe-Modul (20) zum Austausch von Signalen zwischen der Vielzahl von Feldvorrichtungen (12) und dem Steuermodul (14).

2. System nach Anspruch 1, wobei die Steuerlogik in dem FPGA-Modul (16) in einer Hardware-Beschreibungssprache (HDL) konfiguriert ist.

3. System nach Anspruch 1, wobei das FPGA-Modul (16) nur mit speziellen Werkzeugen konfigurierbar ist.

4. System nach Anspruch 2, wobei die Konfiguration des FPGA-Moduls (16) in der Hardware-Beschreibungssprache eine Modifikation in der Steuerlogik durch absichtliche menschliche Eingriffe oder eine Offline- oder Online-Softwarebedrohung umfassend eine Cyberattacke, eine Malware, einen Trojaner, ein Virus, eine infizierte Speichereinrichtung oder eine Kombination davon verhindert.

5. System nach Anspruch 1, wobei das FPGA-Modul (16) eine Hardware-Komponente ist, die eine Schnittstelle mit dem Master-Prozessor (18) und den Eingabe-/Ausgabe-Modulen (20) unter Verwendung einer Kommunikations-Busleitung aufweist.

6. Verfahren (100) zur Sicherung eines verteilten Steuersystems (10), das zur Steuerung industrieller Prozesse verwendet wird, gegen eine Modifikation einer Steuerlogik, wobei das Verfahren die folgenden Schritte umfasst:
- Bereitstellen (110) eines verteilten Steuersystems (10) umfassend eine Vielzahl von Feldvorrichtungen (12), ein Steuermodul (14) und ein Eingabe-/Ausgabe-Modul (20);
- Identifizieren (120) zumindest eines kritischen Prozesses aus einer Vielzahl von industriellen Prozessen;
- Bereitstellen (130) eines feldprogrammierbaren Gatteranordnungs- oder FPGA-Moduls (16);
- Abtrennen (140) einer Steuerlogik für den zumindest einen kritischen Prozess von dem Steuermodul (14); und
- Konfigurieren (150) des FPGA-Moduls (16) durch Schreiben der Steuerlogik des zumindest einen kritischen Prozesses in dem FPGA-Modul, auf solche Weise, dass das Steuermodul das FPGA-Modul umfassend Steuerlogik für zumindest einen kritischen Prozess und einen Master-Prozessor, der parallel zu der FPGA arbeitet, umfasst, wobei der Master-Prozessor Steuerlogik für alle weiteren Prozesse aus der Vielzahl von industriellen Prozessen mit Ausnahme des zumindest einen kritischen Prozesses umfasst.

7. Verfahren nach Anspruch 6, wobei das FPGA-Modul (16) durch Schreiben der Steuerlogik in einer Hardware-Beschreibungssprache konfiguriert wird.

8. Verfahren nach Anspruch 6, wobei die Konfiguration des FPGA-Moduls (16) ausschließlich unter Verwendung spezieller Werkzeuge erfolgt.

9. Verfahren nach Anspruch 7, wobei die Konfiguration des FPGA-Moduls (16) in der Hardware-Beschreibungssprache eine Modifikation in der Steuerlogik durch absichtliche menschliche Eingriffe oder eine Offline- oder Online-Softwarebedrohung umfassend eine Cyberattacke, eine Malware, einen Trojaner, ein Virus, eine infizierte Speichereinrichtung oder eine Kombination davon verhindert.

## Revendications

1. Système de commande distribué sécurisé (10) utilisé pour commander des procédés industriels, le système comprenant :
- une pluralité de dispositifs de terrain (12), chacun des dispositifs de terrain étant utilisé pour des opérations comprenant le démarrage et l'arrêt d'un procédé industriel, la collecte de données d'un capteur, la surveillance d'un paramètre de procédé industriel pour une condition d'alarme ;
- un module de commande (14) pour commander une pluralité de procédés industriels et pour prendre les mesures nécessaires sur la condition d'alarme selon la logique de commande prédéfinie ; sur la base des données reçues de la pluralité de dispositifs de terrain (12), le module de commande comprenant :
- un module de réseau de portes programmables (FPGA) (16) comportant une logique de commande pour au moins un procédé industriel critique parmi la pluralité de procédés industriels ; et
- un processeur maître (18) fonctionnant en parallèle avec le FPGA (16), le processeur maître comportant la logique de commande pour tous les autres procédés industriels de la pluralité de procédés industriels à l'exception du au moins un procédé critique ; et
- un module d'entrée/sortie (20) pour échanger des signaux entre la pluralité de dispositifs de terrain (12) et le module de commande (14).

2. Système selon la revendication 1, dans lequel la logique de commande dans le module FPGA (16) est configurée dans un langage de description de matériel (HDL).

3. Système selon la revendication 1, dans lequel le module FPGA (16) est configurable seulement à l'aide d'outils spéciaux.

4. Système selon la revendication 2, dans lequel la configuration du module FPGA (16) en langage de description de matériel (HDL) empêche la modification de la logique de contrôle par une interruption humaine intentionnelle, par une menace logicielle hors ligne ou en ligne, y compris une cyber-attaque, un malware, un cheval de Troie, un virus, un périphérique de stockage infecté ou une combinaison de ceux-ci.

5. Système selon la revendication 1, dans lequel le module FPGA (16) est un composant de matériel avec une interface au processeur maître (18) et au module d'entrée/sortie (20) en utilisant un bus de communication.

6. Procédé (100) pour sécuriser un système de commande distribué (10) utilisé pour la commande des procédés industriels, contre la modification d'une logique de commande, le procédé comprenant les étapes consistant à :
- fournir (110) un système de commande distribué (10) comprenant une pluralité de dispositifs de terrain (12), un module de commande (14) et un module d'entrée/sortie (20) ;
- identifier (120) au moins un procédé critique parmi une pluralité de procédés industriels ;
- fournir (130) un module de réseau de portes programmables (FPGA) (16) ;
- séparer (140) une logique de commande du au moins un procédé critique du module de commande (14) ; et
- configurer (150) le module FPGA (16) en écrivant la logique de commande du au moins un procédé critique dans le module FPGA, de telle manière que le module de commande comprend le module FPGA comprenant la logique de commande pour au moins un procédé critique, et un processeur maître fonctionnant en parallèle avec le FPGA, le processeur maître comprenant la logique de commande pour tous les autres procédés de la pluralité de procédés industriels à l'exception du au moins un procédé critique.

7. Procédé selon la revendication 6, dans lequel le module FPGA (16) est configuré en écrivant la logique de commande en langage de description de matériel (HDL).

8. Procédé selon la revendication 6, dans lequel la configuration du module FPGA (16) s'effectue seulement à l'aide d'outils spéciaux.

9. Procédé selon la revendication 7, dans lequel la configuration du module FPGA (16) en langage de description de matériel (HDL) empêche la modification de la logique de contrôle par une interruption humaine intentionnelle, par une menace logicielle hors ligne ou en ligne, y compris une cyber-attaque, un malware, un cheval de Troie, un virus, un périphérique de stockage infecté ou une combinaison de ceux-ci.
